# FASCICULE DE BREVET EUROPEEN

(11) **EP 1 688 689 B1**
(45) Date de publication et mention de la délivrance du brevet: **06.05.2015**
(21) Numéro de dépôt: 06290169.9
(22) Date de dépôt: 27.01.2006
(51) Int. Cl.: F25D 19/00, G01J 5/06

(54) **Dispositif à cryostat réfroidi**
Gekühlte Kryostatvorrichtung
Cooled cryostat device

(30) Priorité: 03.02.2005 FR 0501098
(43) Date de publication de la demande: 09.08.2006
(73) Titulaire: SAGEM DEFENSE SECURITE, 92100 Boulogne-Billancourt (FR)
(72) Inventeur: Ruocco-Angari, Bernard, 75003 Paris (FR)
(74) Mandataire: Cabinet Plasseraud

(56) Documents cités:
- EP-A- 0 494 001
- US-A- 4 194 119
- US-A- 4 451 735
- US-A- 4 854 131
- US-A- 4 995 236
- US-A- 5 119 637
- US-A- 5 376 794
- US-A- 5 379 602
- US-A- 6 070 414
- FREUND M M ET AL: "Design and flight performance of a space borne <3>He refrigerator for the infrared telescope in space", CRYOGENICS, ELSEVIER, KIDLINGTON, GB, vol. 38, no. 4, 1 April 1998 (1998-04-01), pages 435-443, XP004123529, ISSN: 0011-2275, DOI: 10.1016/S0011-2275(97)00173-2
- WANG C ET AL: "Theoretical and experimental studies of a double-inlet reversible pulse tube refrigerator", CRYOGENICS, ELSEVIER, KIDLINGTON, GB, vol. 33, no. 6, 1 June 1993 (1993-06-01), pages 648-652, XP024057709, ISSN: 0011-2275, DOI: 10.1016/0011-2275(93)90125-8 [retrieved on 1993-06-01]
- EMES M R ET AL: "Structural analysis of a cryogen-free refrigerator for space", CRYOGENICS, ELSEVIER, KIDLINGTON, GB, vol. 41, no. 11-12, 1 November 2001 (2001-11-01), pages 771-779, XP004335670, ISSN: 0011-2275, DOI: 10.1016/S0011-2275(01)00171-0

## Description

La présente invention concerne des perfectionnements apportés aux dispositifs à cryostat refroidi.

Les exigences de température de fonctionnement et les contraintes liées à l'emploi de cryogénérateurs (du type Stirling, Joule-Thomson ou autres) ont fait converger l'état de l'art des cryostats refroidis vers une géométrie typique :
- un doigt froid à l'extrémité duquel sont fixés des moyens détecteurs infrarouges, à savoir le détecteur infrarouge et ses accessoires (écrans, baffles, filtres,...), et
- une enveloppe extérieure entourant ledit doigt froid.

Le doigt froid est généralement un tube métallique de faible diamètre, faible épaisseur et grande longueur, ceci afin de diminuer les pertes thermiques par conduction entre le plan focal à température cryogénique et l'enveloppe extérieure à température ambiante.

L'ensemble constitué par le doigt froid et sa "charge utile" (moyens détecteurs, notamment détecteur et accessoires) a généralement un premier mode vibratoire propre assez bas en fréquence (typiquement 500 à 1500 Hz). Cette caractéristique est difficilement compatible des environnements mécaniques rencontrés notamment dans les applications militaires (spectres d'environnement vibratoire allant jusqu'à 2 kHz, voire au-delà ; niveaux allant jusqu'à 10 g en valeur efficace, voire plus).

Pour les applications avec environnement mécanique sévère, on est amené à raidir le doigt froid de façon à augmenter sa première fréquence propre. L'objectif est de limiter les déplacements du détecteur par rapport aux références mécaniques et d'augmenter la fiabilité (stabilité de l'axe optique).

La façon la plus classique de raidir un doigt froid est d'ajouter des poutres rigides transversales qui relient le doigt froid, en particulier au voisinage de l'extrémité libre de celui-ci, à l'enveloppe extérieure. US-5119637 divulgue un doigt froid avec des moyens raidisseurs. La mise en oeuvre de raidisseurs permet d'éliminer le mode de flexion du doigt froid. Pour fixer les idées, dans un exemple typique d'agencement d'un dispositif cryostatique, le premier mode propre du doigt froid, qui se situe vers 1350 Hz lorsque le doigt est libre, est porté à 3189 Hz pour le doigt froid raidi au moyen de raidisseurs, donc hors de la bande spectrale des environnements mécaniques (de l'ordre de 5 à 2000 Hz). La stabilité recherchée du plan focal du dispositif cryostatique est ainsi assurée.

Toutefois, cette solution connue présente deux inconvénients principaux : elle augmente les pertes thermiques des cryostats et elle augmente leur coût de fabrication.

Pour ce qui est tout d'abord des pertes thermiques, les raidisseurs se comportent comme des courts-circuits thermiques entre les zones froides et les zones chaudes du cryostat. Même s'ils sont réalisés dans des matériaux à faible conductivité thermique, ces raidisseurs augmentent de façon importante les pertes thermiques des cryostats. A titre d'exemple, l'ajout de quatre raidisseurs dans un cryostat connu (verre borosilicate, diamètre 1 mm, longueur environ 15 mm) fait passer les pertes d'environ 100 à 150 mW environ (soit + 50% environ). Ce surplus de pertes thermiques entraînerait une augmentation de la consommation de la machine à froid de l'ordre de 1 W environ. Comme ce cryostat connu est principalement utilisé dans des applications portables où la consommation électrique est critique, l'implantation de raidisseurs n'a pas pu être réalisée. Le contrecoup de l'absence de raidisseurs est un premier mode propre du doigt froid qui se situe vers 580 Hz, et donc une limitation des performances (stabilité de l'axe optique) en environnement vibratoire dans les applications non portables du même dispositif.

Pour ce qui est maintenant du coût, la réalisation et la mise en place des raidisseurs est difficile, et donc coûteuse. Les matériaux utilisés (typiquement du verre) ont un coût de fabrication et de mise en forme important. Seules des formes simples sont réalisables en fabrication. C'est pourquoi on utilise généralement plusieurs raidisseurs individuels de forme simple (typiquement, quatre bâtonnets cylindriques) plutôt qu'une pièce unique de forme plus complexe (par exemple en étoile à plusieurs branches). Cette multiplication des pièces et des assemblages influe défavorablement sur le coût de réalisation.

Il faut également souligner que, dans l'état de l'art actuel, les raidisseurs en forme de bâtonnets comme précité ne sont pas dimensionnés pour les exigences de leur fonction principale qui est d'augmenter le premier mode propre du doigt froid. Leur dimension résulte généralement de considérations de faisabilité en fabrication et en assemblage. Ils sont généralement beaucoup plus gros que ce que leur fonction mécanique ne requiert.

Un système de haubanage par fils travaillant uniquement en traction (comme les haubans d'un gréement de voilier ou de la voilure d'un avion biplan) pourrait remplir la même fonction avec des sections nettement plus faibles. Toutefois, les tentatives de mise en oeuvre pratique de cette solution se sont heurtées à des difficultés d'un autre genre : la mise en place et le réglage en tension des haubans individuels autour d'un doigt froid est encore plus difficile que la pose de raidisseurs rigides travaillant en compression. Le réglage des haubans doit être fait de façon à obtenir la rigidité souhaitée, mais sans déformer le doigt froid. Finalement, les difficultés de réglage individuel des haubans sont telles que cette solution n'a pas été retenue.

L'invention a pour but de proposer une solution perfectionnée qui permette de résoudre le problème de base constitué par le raidissement efficace du doigt froid tout en écartant les inconvénients des solutions actuellement connues.

A ces fins, l'invention propose un dispositif à cryostat refroidi comportant :
- un doigt froid à l'extrémité duquel sont fixés des moyens détecteurs infrarouges,
- une enveloppe extérieure entourant ledit doigt froid, et
- des moyens raidisseurs pour le raidissement du doigt froid interposés entre l'enveloppe extérieure et le doigt froid au voisinage de l'extrémité de ce dernier,
lequel dispositif se caractérise, étant agencé conformément à l'invention, en ce que les moyens raidisseurs comprennent :
- des premiers oeillets prévus intérieurement dans l'enveloppe et répartis périphériquement sur le pourtour de celle-ci,
- des seconds oeillets prévus extérieurement sur le doigt froid et répartis périphériquement sur le pourtour de celui-ci,
- les premiers oeillets et les seconds oeillets étant mutuellement décalés angulairement,
- et un câble tendu selon un contour fermé sur lui-même entre l'enveloppe extérieure et le doigt froid en traversant librement les premiers et seconds oeillets, ledit câble, lorsque le doigt froid a été placé en situation équilibrée, étant solidarisé à l'enveloppe extérieure et au doigt froid.

Ainsi, dans le contexte de l'invention, on conserve l'avantage du raidissement par haubanage qui a été évoqué plus haut, avec la très faible conductibilité thermique entre le doigt froid et l'enveloppe qui lui est associée. Toutefois, la solution conforme à l'invention écarte les haubans individuels trop difficiles à régler individuellement et fait appel à un câble continu sur lequel le doigt froid peut se déplacer lors de la mise en tension. Cette possibilité de déplacement relatif du doigt froid et du câble permet d'assurer un équilibrage quasi automatique de la tension de chaque brin du câble puisque les brins formant haubans ne sont plus indépendants les uns des autres, mais sont solidaires les uns des autres et peuvent coulisser sur le doigt froid.

Dans un mode de réalisation préféré, les premiers oeillets appartiennent à une première bague solidarisable à l'enveloppe extérieure à l'intérieur de celle-ci et les seconds oeillets appartiennent à une seconde bague solidarisable au doigt froid autour de celui-ci. Avantageusement alors, les deux bagues et le câble les réunissant peuvent former un sous-ensemble préassemblé avant son montage dans le dispositif. Il en résulte une simplicité accrue de la fabrication, puis du montage : le sous-ensemble ainsi réalisé est installé dans le cryostat avec la bague extérieure solidarisée sur la face intérieure de l'enveloppe extérieure du cryostat et avec la bague intérieure solidarisée sur le doigt froid autour de celui-ci. Les positions respectives des deux bagues par rapport à l'axe longitudinal du cryostat déterminent la tension du câble. La mise en tension est donc assurée au moment du montage. Du fait que le câble peut coulisser, la tension s'équilibre entre les différents "rayons" ou haubans. Après mise en place des deux bagues assurant le réglage de la tension, il est nécessaire d'immobiliser le câble en quelques points, par exemple avec des points de soudure ou de colle.

La solidarisation des bagues sur leur support respectif peut être réalisée de toute manière appropriée. Notamment, on peut prévoir que la première et/ou la seconde bague soit métallique et soit soudée ou brasée dans l'enveloppe extérieure, respectivement sur le doigt froid. On peut aussi prévoir que la première et/ou la seconde bague soit collée dans l'enveloppe extérieure, respectivement sur le doigt froid.

Pour ce qui est du câble, on soulignera qu'il ne travaille qu'en traction et sa section peut être faible, ce qui limite fortement les pertes thermiques par cette voie. De multiples possibilités s'offrent pour le choix du câble, aussi bien pour ce qui est de la nature de son matériau constitutif que de son diamètre, afin d'améliorer le compromis entre rigidité et pertes thermiques.

Ainsi, on peut prévoir que le câble soit métallique (par exemple acier, titane pur, alliage de titane TA6V4, nickel, molybdène...). On peut également prévoir que le câble soit en matière synthétique, par exemple en polymères (polyaramides tels que ceux commercialisés sous les noms de Kevlar ou Nomex, ...) ou en composites, matériaux présentant généralement une très faible conductivité thermique et de bonnes propriétés mécaniques. De plus, le câble peut être de très faible diamètre, de quelques dixièmes de millimètre jusqu'à 0,025 mm pour les métaux (notamment dans le domaine du fil à usage chirurgical ou du fil pour électro-érosion) et jusqu'à quelques dixièmes de millimètre pour les polymères et composites, sous forme monobloc ou tressée, de section ronde, plate,....

Pour fixer les idées, si par exemple on utilise du fil de Kevlar (conductivité 0,04 W/m.°K) de 0,6 mm de diamètre dans un assemblage à quatre raidisseurs d'environ 15 mm de long, les pertes thermiques dans un cryostat du type cité au préambule seront de moins de 1 mW, soit environ 50 fois moins qu'avec la solution classique.

Avec des pertes thermiques ainsi minimisées, les deux performances : pertes thermiques minimales (normalement obtenues sans raidisseurs) et rigidité maximale (normalement obtenue avec raidisseurs) peuvent être obtenues simultanément.

Les bagues sont des pièces mécaniques simples pouvant être réalisées à très faible coût (métal estampé, céramique frittée,...) dans des formes relativement complexes. De nombreux types d'oeillets de fixation (sertis ou soudés) permettant de fixer le câble sur les bagues sont disponibles dans le commerce, ou peuvent être produits à moindre coût sans difficultés techniques. Le sous-ensemble constitué des bagues et du câble peut être assemblé par une main d'oeuvre moins qualifiée et dans un environnement moins coûteux que dans une salle propre d'assemblage de cryostats. Enfin la mise en place du sous-ensemble raidisseur dans le cryostat est simplifiée par rapport à l'assemblage de multiples raidisseurs individuels. Le coût global de la solution proposée conformément à l'invention est moindre que celui de la solution classique mentionnée plus haut.

La bague intérieure étant reliée au doigt froid, sa masse thermique vient s'ajouter à celle de tous les éléments portés par le doigt froid. Cela ne constitue pas un désavantage par rapport à la solution classique, car les raidisseurs massifs classiques ont eux-mêmes une masse thermique qui vient en partie s'ajouter à celle du doigt froid. De plus, il est possible d'envisager que la bague intérieure soit ouvragée de façon à minimiser sa masse, ou bien soit utilisée pour remplir d'autres fonctions (cale relais de câblage, support d'écran froid,...) afin de limiter, voire diminuer la masse thermique totale.

Enfin, on soulignera que, comme dans la solution classique, le sous-ensemble raidisseur relie une partie chaude (l'enveloppe du cryostat) à une partie (le doigt froid) qui est chaude ou froide selon que le cryostat est à l'arrêt ou en fonctionnement. La tension des rayons peut donc se trouver affectée par la dilatation différentielle des matériaux constitutifs respectifs. On peut avantageusement mettre ce phénomène à profit pour augmenter la rigidité lors de la mise en froid, puisque le raccourcissement du doigt froid sous l'effet de la température va avoir tendance à tendre les rayons.

L'invention sera mieux comprise à la lecture de la description détaillée qui suit de certains modes de réalisation préférés donnés uniquement à titre d'exemples non limitatifs. Dans cette description, on se réfère aux dessins annexés sur lesquels :
- la figure 1A est une vue très schématique de côté d'un dispositif à cryostat refroidi agencé conformément à l'invention ;
- la figure 1B est une vue de dessus, en coupe selon la ligne IB-IB, du dispositif de la figure 1A ;
- les figures 2A, 2B et 2C sont des vues de dessus respectives de diverses variantes d'un mode de réalisation préféré permettant la mise en oeuvre pratique des dispositions montrées aux figures 1A et 1B ; et
- la figure 3 est une vue de côté du mode de réalisation préféré des figures 2A, 2B et 2C montré en situation de montage.

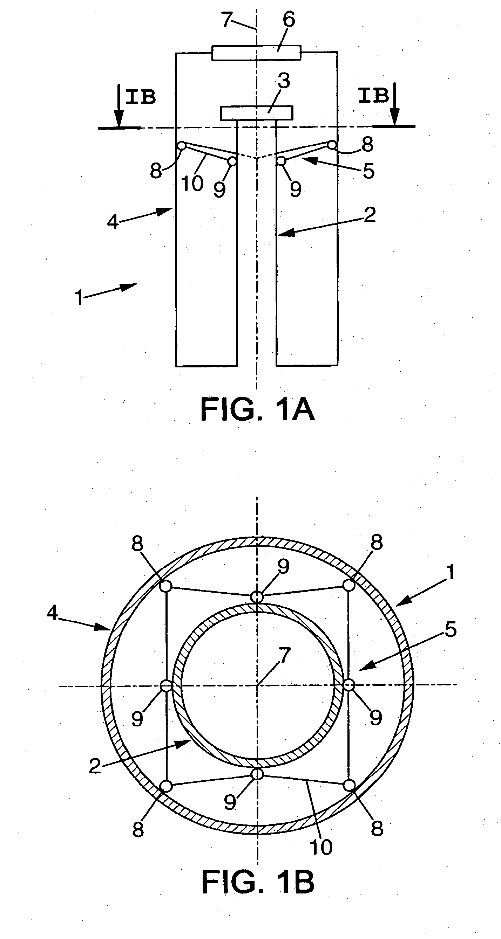

En se reportant maintenant tout d'abord aux figures 1A et 1B, un dispositif à cryostat refroidi, désigné dans son ensemble par la référence 1, comprend :
- un doigt froid 2 à l'extrémité duquel sont fixés des moyens détecteurs infrarouges 3, à savoir le détecteur infrarouge et ses accessoires (écrans, baffles, filtres,...),
- une enveloppe 4 extérieure entourant ledit doigt froid 3 et comportant une fenêtre 6 située en regard des moyens détecteurs 3 et coaxialement à ceux-ci (la référence 7 désignant l'axe commun ou axe de visée), et
- des moyens raidisseurs 5 pour le raidissement du doigt froid 3 interposés entre l'enveloppe 4 extérieure et le doigt froid 3 au voisinage de l'extrémité libre ou supérieure de ce dernier.

Conformément à l'invention, on prévoit que les moyens raidisseurs 5 comprennent :
- des premiers oeillets 8 situés intérieurement dans l'enveloppe 4 et répartis périphériquement sur le pourtour de celle-ci,
- des seconds oeillets 9 prévus extérieurement sur le doigt froid 2 et répartis périphériquement sur le pourtour de celui-ci,
- les premiers oeillets 8 et les seconds oeillets 9 étant mutuellement décalés angulairement,
- et un câble ou lien souple 10 tendu selon un contour fermé sur lui-même entre l'enveloppe extérieure 4 et le doigt froid 2 en traversant librement les premiers et seconds oeillets 8, 9.

Dans l'exemple illustré à la figure 1B, les premiers et seconds oeillets sont respectivement au nombre de quatre disposés symétriquement : les premiers oeillets sont au nombre de quatre décalés angulairement d'environ 90°, les seconds oeillets sont au nombre de quatre décalés angulairement d'environ 90°, et les premiers et seconds oeillets sont mutuellement décalés angulairement d'environ 45° ; toutefois, comme cela apparaîtra plus clairement plus loin, cet agencement n'est pas exclusif.

Le fait de recourir à un câble 10 continu sur lequel le doigt froid 2 peut se déplacer lors de la mise en tension permet d'assurer un équilibrage quasi automatique de la tension de chaque brin du câble 10 puisque les brins formant haubans ne sont plus indépendants les uns des autres, mais sont solidaires les uns des autres et peuvent coulisser sur le doigt froid 2.

Une fois l'équilibrage réalisé et le doigt froid 10 maintenu correctement coaxialement à l'axe 7, le câble 10 est solidarisé à l'enveloppe 4 et au doigt froid 2, par exemple par collage ou par soudure de manière que l'ensemble demeure stable.

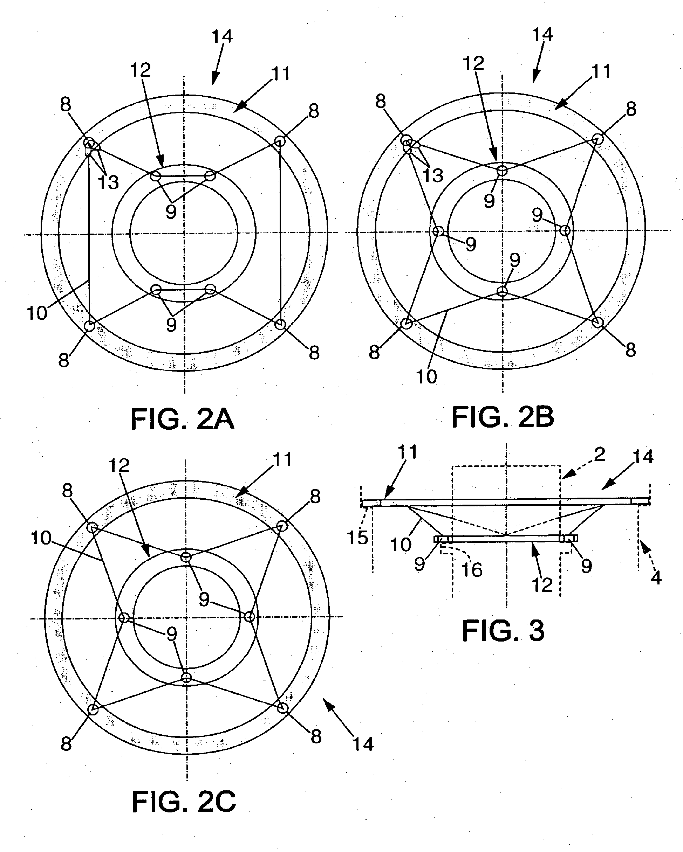

Dans un mode de réalisation préféré illustré aux figures 2A, 2B et 2C, les premiers oeillets 8 appartiennent à une première bague 11 solidarisable à l'enveloppe 4 extérieure à l'intérieur de celle-ci et les seconds oeillets 9 appartiennent à une seconde bague 12 solidarisable au doigt froid 2 autour de celui-ci.

Cet agencement général peut donner lieu à de nombreuses variantes de réalisation.

Ainsi, à la figure 2A les oeillets 8 de la première bague 11 sont au nombre de quatre répartis angulairement de façon sensiblement équidistante, tandis que les oeillets 9 de la seconde bague 12 sont également au nombre de quatre rapprochés deux à deux ; le câble 10, fixé par une de ses extrémités à un des oeillets 8, s'étend jusqu'à la seconde bague où il traverse consécutivement deux oeillets 9 rapprochés, puis s'étend jusqu'à la première bague 11 où il traverse consécutivement deux oeillets 8 successifs, puis s'étend à nouveau jusqu'à la seconde bague 12 où il traverse consécutivement les deux autres oeillets 9 rapprochés, et enfin s'étend jusqu'à la première bague 11 où il traverse consécutivement les deux autres oeillets 8 successifs avec son extrémité fixée à l'oeillet 8 de départ. La fixation des extrémités du câble 10 à l'oeillet 8 est schématisée par deux boucles 13.

A la figure 2B, les oeillets 8 de la première bague 11 sont au nombre de quatre répartis angulairement de façon équidistante et les oeillets 9 de la seconde bague 12 sont également au nombre de quatre répartis angulairement de façon équidistante, les deux bagues 11 et 12 étant mutuellement décalées angulairement. Le câble 10, dont une extrémité est fixée (boucle 13) à l'un des oeillets 8, s'étend ensuite entre les deux bagues en traversant alternativement les oeillets 8 et 9, avec son autre extrémité fixée (boucle 13) à l'oeillet 8 de départ, le câble prenant dans cet exemple la configuration d'une étoile à quatre branches.

A la figure 2C, l'agencement est identique à celui de la figure 2B, à ceci près que les extrémités du câble 10 ne sont plus fixées à un des oeillets 8, mais sont solidarisées l'une à l'autre de manière à assurer la continuité de forme et de résistance mécanique du câble 10 : ce dernier devient ainsi totalement libre de glisser vis-à-vis des deux bagues 11 et 12.

La figure 3 est une vue de côté, en coupe diamétrale, de l'une quelconque des variantes illustrées aux figures 2A, 2B et 2C.

L'agencement général à deux bagues 11, 12 qui vient d'être exposé présente l'avantage très intéressant que les deux bagues 11, 12 et le câble 10 les réunissant peuvent former un sous-ensemble 14 préassemblé avant son montage dans le dispositif. Il en résulte une simplicité accrue de la fabrication, puis du montage : le sous-ensemble 14 ainsi réalisé est installé dans le cryostat avec la bague extérieure 11 solidarisée sur la face intérieure de l'enveloppe extérieure 4 du cryostat et avec la bague intérieure 12 solidarisée sur le doigt froid 2 autour de celui-ci, comme suggéré à la figure 3 sur laquelle l'enveloppe 4 et le doigt froid sont, partiellement, esquissés en tirets. Les positionnements des deux bagues 11, 12 lors du montage peuvent être facilités en prévoyant des épaulements respectivement 15 et 16 sur l'enveloppe 4 et le doigt froid 2, comme illustré à la figure 3.

Les positions respectives des deux bagues 11, 12 par rapport à l'axe 7 longitudinal du cryostat déterminent la tension du câble 10. La mise en tension est donc assurée au moment du montage. Du fait que le câble peut coulisser librement dans les oeillets 8, 9, la tension s'équilibre entre les différents "rayons" ou haubans.

Après mise en place des deux bagues 8, 9 assurant le réglage de la tension équilibrée du câble 10, il est nécessaire d'immobiliser le câble 10 en quelques points, par exemple avec des points de soudure ou de colle (non montré).

La solidarisation des bagues 11, 12 sur leurs supports respectifs peut être réalisée de toute manière appropriée. Notamment, on peut prévoir que la première et/ou la seconde bague 11, 12 soit métallique et soit soudée ou brasée dans l'enveloppe extérieure 4, respectivement sur le doigt froid 2. On peut aussi prévoir que la première et/ou la seconde bague 11, 12 soit collée dans l'enveloppe extérieure 4, respectivement sur le doigt froid 2.

Les bagues 11, 12 sont des pièces mécaniques simples pouvant être réalisées à très faible coût (métal estampé, céramique frittée,...) dans des formes relativement complexes. De nombreux types d'oeillets de fixation (sertis ou soudés) permettant de fixer le câble 10 sur les bagues sont disponibles dans le commerce, ou peuvent être produits à moindre coût sans difficultés techniques.

En outre, on peut prévoir que la bague intérieure 12 destinée à équiper le doigt froid 2 soit ouvragée de façon à minimiser sa masse et/ou soit utilisée pour remplir d'autres fonctions (cale relais de câblage, support d'écran froid, ...) afin de limiter, voire diminuer la masse thermique totale.

Le câble 10 peut être métallique (par exemple acier, titane pur, alliage de titane TA6V4, nickel, molybdène ...) ou bien en matière synthétique, par exemple en polymères (polyaramides tels que ceux commercialisés sous les noms de Kevlar ou Nomex,...) ou en composites, matériaux présentant généralement une très faible conductivité thermique et de bonnes propriétés mécaniques. De plus, le câble 10 peut être de très faible diamètre, de quelques dixièmes de millimètre jusqu'à 0,025 mm pour les métaux (notamment dans le domaine du fil à usage chirurgical ou du fil pour électroérosion) et jusqu'à quelques dixièmes de millimètre pour les polymères et composites, sous forme monobloc ou tressée, de section ronde, plate, ....

Comme le sous-ensemble raidisseur 14 relie une partie chaude (l'enveloppe 4 du cryostat) à une partie (le doigt froid 2) qui est chaude ou froide selon que le cryostat est à l'arrêt ou en fonctionnement, la tension des rayons définis par le câble 10 peut être modifiée par la dilatation différentielle des matériaux constitutifs respectifs. On peut avantageusement mettre ce phénomène à profit pour augmenter la rigidité lors de la mise en froid, puisque le raccourcissement du doigt froid 2 sous l'effet de l'abaissement de la température va conduire à accroître la tension du câble.

## Revendications

1. Dispositif (1) à cryostat refroidi comportant :
- un doigt froid (2) à l'extrémité duquel sont fixés des moyens détecteurs infrarouges (3),
- une enveloppe (4) extérieure entourant ledit doigt froid (2), et
- des moyens raidisseurs (5) pour le raidissement du doigt froid (2) interposés entre l'enveloppe (4) extérieure et le doigt froid (2) au voisinage de l'extrémité de ce dernier,
**caractérisé en ce que** les moyens raidisseurs (5) comprennent :
- des premiers oeillets (8) prévus intérieurement dans l'enveloppe (4) et répartis périphériquement sur le pourtour de celle-ci,
- des seconds oeillets (9) prévus extérieurement sur le doigt froid (2) et répartis périphériquement sur le pourtour de celui-ci,
- les premiers oeillets (8) et les seconds oeillets (9) étant mutuellement décalés angulairement,
- et un câble (10) tendu selon un contour fermé sur lui-même entre l'enveloppe (4) extérieure et le doigt froid (2) en traversant librement les premiers et seconds oeillets (8, 9), ledit câble (10), lorsque le doigt froid (2) a été placé en situation équilibrée, étant solidarisé à l'enveloppe (4) extérieure et au doigt froid (2).

2. Dispositif selon la revendication 1, **caractérisé en ce que** les premiers oeillets (8) appartiennent à une première bague (11) solidarisable à l'enveloppe (4) extérieure à l'intérieur de celle-ci et **en ce que** les seconds oeillets (9) appartiennent à une seconde bague (12) solidarisable au doigt froid (2) autour de celui-ci.

3. Dispositif selon la revendication 2, **caractérisé en ce que** les deux bagues (11, 12) et le câble (10) les réunissant forment un sous-ensemble (13) préassemblé avant son montage dans le dispositif (1).

4. Dispositif selon la revendication 2 ou 3, **caractérisé en ce que** la première et/ou la seconde bague (11 ; 12) est métallique et est soudée ou brasée dans l'enveloppe (4) extérieure, respectivement sur le doigt froid (2).

5. Dispositif selon la revendication 2 ou 3, **caractérisé en ce que** la première et/ou la seconde bague (11 ; 12) est collée dans l'enveloppe (4) extérieure, respectivement sur le doigt froid (2).

6. Dispositif selon l'une quelconque des revendications 1 à 5, **caractérisé en ce que** le câble (10) est métallique.

7. Dispositif selon l'une quelconque des revendications 1 à 5, **caractérisé en ce que** le câble (10) est en matière synthétique.

8. Dispositif selon l'une quelconque des revendications 1 à 7, **caractérisé en ce que** le câble (10) traverse alternativement les premiers et seconds oeillets (8, 9).

## Patentansprüche

1. Gekühlte Kryostatvorrichtung (1), umfassend:
- einen Kühlfinger (2), an dessen Ende Infrarotdetektoren (3) befestigt sind,
- eine äußere Hülle (4), die den Kühlfinger (2) umgibt, und
- Versteifungsmittel (5) zur Versteifung des Kühlfingers (2), die zwischen der äußeren Hülle (4) und dem Kühlfinger (2) in der Nähe des Endes dieses letztgenannten angeordnet sind,
**dadurch gekennzeichnet, dass** die Versteifungsmittel (5) umfassen:
- erste Ösen (8), die innen in der Hülle (4) vorgesehen und umlaufend auf dem Umfang derselben verteilt sind,
- zweite Ösen (9), die außen auf dem Kühlfinger (2) vorgesehen und umlaufend auf dem Umfang desselben verteilt sind,
- wobei die ersten Ösen (8) und die zweiten Ösen (9) wechselseitig im Winkel versetzt sind,
- und ein Kabel (10), das entlang einer auf sich geschlossenen Kontur zwischen der äußeren Hülle (4) und dem Kühlfinger (2) gespannt ist, wobei es frei durch die ersten und zweiten Ösen (8, 9) hindurchgeht, wobei das Kabel (10), wenn der Kühlfinger (2) im Gleichgewicht angeordnet wurde, mit der äußeren Hülle (4) und dem Kühlfinger (2) verbunden ist.

2. Vorrichtung nach Anspruch 1, **dadurch gekennzeichnet, dass** die ersten Ösen (8) einem ersten Ring (11) angehören, der mit der äußeren Hülle (4) im Inneren derselben verbunden werden kann, und dass die zweiten Ösen (9) einem zweiten Ring (12) angehören, der mit dem Kühlfinger (2) um diesen herum verbunden werden kann.

3. Vorrichtung nach Anspruch 2, **dadurch gekennzeichnet, dass** die beiden Ringe (11, 12) und das Kabel (10), das sie verbindet, eine vormontierte Untereinheit (13) vor ihrer Montage in der Vorrichtung (1) bilden.

4. Vorrichtung nach Anspruch 2 oder 3, **dadurch gekennzeichnet, dass** der erste und/oder der zweite Ring (11; 12) metallisch ist und in die äußere Hülle (4) bzw. auf den Kühlfinger (2) geschweißt oder gelötet ist.

5. Vorrichtung nach Anspruch 2 oder 3, **dadurch gekennzeichnet, dass** der erste und/oder der zweite Ring (11; 12) in die äußere Hülle (4) oder auf den Kühlfinger (2) geklebt ist.

6. Vorrichtung nach einem der Ansprüche 1 bis 5, **dadurch gekennzeichnet, dass** das Kabel (10) metallisch ist.

7. Vorrichtung nach einem der Ansprüche 1 bis 5, **dadurch gekennzeichnet, dass** das Kabel (10) aus Kunststoff ist.

8. Vorrichtung nach einem der Ansprüche 1 bis 7, **dadurch gekennzeichnet, dass** das Kabel (10) alternativ durch die ersten und die zweiten Ösen (8, 9) hindurchgeht.

## Claims

1. A cooled cryostat device (1) comprising:
· a cold finger (2) having infrared detector means (3) secured to the end thereof;
· an outer casing (4) surrounding said cold finger (2); and
· stiffener means (5) for stiffening the cold finger (2) and interposed between the outer casing (4) and the cold finger (2) in the vicinity of the end thereof;
the device being **characterized in that** the stiffener means (5) comprise:
· first eyelets (8) provided on the inside of the casing (4) and distributed around the periphery thereof;
· second eyelets (9) provided on the outside of the cold finger (2) and distributed around the periphery thereof;
· the first eyelets (8) and the second eyelets (9) being mutually angularly offset; and
· a cable (10) tensioned around a closed loop between the outer casing (4) and the cold finger (2), passing freely through the first and second eyelets (8, 9), said cable (10), once the cold finger (2) has been placed in a balanced situation, being secured to the outer casing (4) and to the cold finger (2).

2. A device according to claim 1, **characterized in that** the first eyelets (8) belong to a first ring (11) suitable for being secured to the inside of the outer casing (4), and **in that** the second eyelets (9) belong to a second ring (12) suitable for securing around the cold finger (2).

3. A device according to claim 2, **characterized in that** the two rings (11, 12) and the cable (10) uniting them form a subassembly (13) that is preassembled prior to being assembled in the device (1).

4. A device according to claim 2 or claim 3, **characterized in that** the first and/or second ring (11; 12) is made of metal and is welded or soldered in the outer casing (4) or on the cold finger (2).

5. A device according to claim 2 or claim 3, **characterized in that** the first and/or second ring (11; 12) is bonded inside the outer casing (4) or on the cold finger (2) by adhesive.

6. A device according to any one of claims 1 to 5, **characterized in that** the cable (10) is made of metal.

7. A device according to any one of claims 1 to 5, **characterized in that** the cable (10) is made of synthetic material.

8. A device according to any one of claims 1 to 7, **characterized in that** the cable (10) passes through the first and second eyelets (8, 9) in alternation.
